# EUROPÄISCHE PATENTSCHRIFT

(11) **EP 0 509 299 B1**
(45) Veröffentlichungstag und Bekanntmachung des Hinweises auf die Patenterteilung: **09.10.1996**
(21) Anmeldenummer: 92105396.3
(22) Anmeldetag: 28.03.1992
(51) Int. Cl.: G02B 6/44

(54) **Optisches Kabel**
Optical cable
Câble optique

(30) Priorität: 05.04.1991 US 680991; 05.04.1991 US 681156
(43) Veröffentlichungstag der Anmeldung: 21.10.1992
(73) Patentinhaber: ALCATEL N.V., NL-1077 XX Amsterdam (NL)
(72) Erfinder: Edmundson, Gary Wayne, Hickory, North Carolina 28601 (US); Nilsson, Richard Cory, Hickory, North Carolina 28601 (US); Nelson, John Carl, Hickory, North Carolina 28601 (US)
(74) Vertreter: Mende, Eberhard, Dipl.-Ing.

(56) Entgegenhaltungen:
- EP-A- 0 260 741
- EP-A- 0 428 931
- DE-A- 3 537 682
- DE-A- 3 537 684
- PATENT ABSTRACTS OF JAPAN, unexamined applications, P Sektion, Band 7, Nr. 210,16 September 1982 THE PATENT OFFICE JAPANESE GOVERNMENT Seite 91 P 223

## Beschreibung

Die vorliegende Erfindung betrifft ein optisches Kabel mit einer Vielzahl von Fasern für Teilnehmeranschlüsse.

Mit der Einführung lokaler Netzwerke und der Möglichkeit einer Breitbandübertragung mittels faseroptischer Übertragungsmittel, wird immer mehr die Möglichkeit genutzt, für neue Übertragungssysteme optische Fasern einzusetzen. Bekannt sind optische Kabel unterschiedlichen Aufbaues, die solche optischen Fasern enthalten, wobei dem Schutz der Faser im Kabel wegen deren Anfälligkeit gegen mechanische Beanspruchungen besondere Aufmerksamkeit zukommt. Werden solche optischen Übertragungskabel zwischen zwei entfernten Stellen im Erdreich verlegt, so sind die optischen Fasern sicher im umgebenden Schichtenaufbau des Kabels gehalten. Sollen jedoch längs dieser Kabelstrecke beispielsweise an das optische Kabel Teilnehmer angeschlossen werden, die sich auf der Strecke zwischen den entfernten Stellen befinden, ist es erforderlich, längs der Kabelstrecke Spleiße vorzusehen, um eine oder mehrere der im Kabelinnern befindlichen Fasern nach außen zu führen bzw. diese zu trennen, um entsprechende Anschlußkabel für den Teilnehmer vorsehen zu können. Abgesehen davon, daß man beim Spleißen des Kabels durch besondere Maßnahmen für eine ausreichende Vorratslänge an Fasermaterial zu sorgen hat, ist es auch schwierig und zeitaufwendig, bei bereits verlegten Kabeln eine Spleißstelle anzubringen. Hinzu kommen äußere Witterungseinflüsse, die die Montage am Kabelspleiß beim verlegten Kabel oft ungünstig beeinflussen. Zu berücksichtigen ist ferner, daß der Kabelspleiß eine Vielzahl von Aufgaben zu erfüllen hat, zum einen muß er die optische Faser sicher vor Feuchtigkeit und mechanischen Beanspruchungen schützen, er muß gleichzeitig aber auch Fixpunkt für das abgehende Teilnehmeranschlußkabel sein. Üblich ist es daher, den Kabelspleiß mit einem Gehäuse zu umgeben, in dem das optische Kabel bzw. die aufgetrennten Elemente des Schichtenaufbaues sicher verankert sind. Die bisher bekannten Spleißverbindungen haben deshalb und weil für einen gewissen Vorrat an optischen Fasern an der Spleißstelle gesorgt werden muß, erhebliche äußere Abmessungen, die die Anschlußtechnik vor Ort ebenfalls negativ beeinflussen.

Bekannt ist beispielsweise in diesem Zusammenhang (EP 0 260 741 A2) ein Abzweig für ein mehrere LWL enthaltende optische Kabel, wobei der Muffenkörper die Kabelumhüllungen der ankommenden und abgehenden Kabel mitumschließt. Die Montage des Teilnehmeranschlusses am durchgehenden Kabel erfolgt hierbei am verlegten Kabel.

Um hier weiterzukommen, hat man auch schon versucht (EP 0 428 931 A2, Sand der Technik gemäß Art. 54(3) EPÜ), Teilnehmer eines Glasfaserbreitbandnetzes spleißfrei an ein optisches Kabel anzuschließen. Zu diesem Zweck wird der Mantel des optischen Kabels in der Nähe des Teilnehmers aufgetrennt und es wird ein optisches Element, also die Glasfaser, zur Versorgung eines Endteilnehmers derart aus dem optischen Kabel entnommen, daß der von der Zentrale weiter entfernte Teil des optischen Elementes zurückgeholt wird, um anschließend ohne Verbindungsstelle angeschlossen zu werden. Je nach Kabeltyp kann es hierbei oft schwierig sein, die jeweilige Faser oder auch mehrere Fasern vom entfernt liegenden Ende zurückzuholen, ganz abgesehen davon, daß diese Arbeiten ebenfalls bei einem bereits verlegten Kabel durchgeführt werden müssen.

Ausgehend von diesem Stand der Technik liegt der Erfindung die Aufgabe zugrunde, eine Möglichkeit zu finden, Teilnehmer spleißfrei mit einem optischen Kabel zu verbinden, wobei diese Verbindung montagefreundlich und konfektionierbar ist sowie geringe Abmessungen aufweist.

Diese Aufgabe wird gemäß der Erfindung durch die im kennzeichnenden Teil des Anspruches 1 angeführten Merkmale gelöst.

Zur Herstellung eines erfindungsgemäßen Kabels geht man vorteilhaft so vor, daß entsprechend der gewählten Netzkonfiguration an vorbestimmten Stellen längs des Kabels jeweils paarweise Trenn- und Abzweigstellen festgelegt werden, daß nach Durchtrennen des Mantels von außen sowie des weiteren Schichtenaufbaues die optischen Fasern freigelegt, an der Trennstelle die ausgewählten Fasern geschnitten und diese im Kabelinnern zur Abzweigstelle gezogen werden. Anschließend werden aus den Faserenden vorbestimmter Länge die Teilnehmeranschlußkabel hergestellt und die Abzweigstelle wird von einem Muffenkörper umschlossen. Schließlich werden die Teilnehmeranschlußkabel bis zur Verlegung des optischen Kabels an diesem fixiert. Die Fixierung kann beispielsweise durch eine Bebänderung erfolgen, sie ist auf jeden Fall so durchzuführen, daß beim Auf trommeln und Abwickeln des Kabels eine Behinderung der benachbarten Windung bzw. der benachbarten Lagen des Kabels vermieden ist.

Die für die Teilnehmeranschlußkabel vorgesehenen Faserenden werden schon aus Gründen des mechanischen Schutzes an der Abzweigstelle in vorgefertigte Schutzhüllen eingeführt. Diese können, wenn die Trenn- und Abzweigstellen bereits während der Fertigung hergestellt werden, so ausgebildet sein, daß sie in ihrem Aufbau dem Schichtenaufbau des optischen Kabels entsprechen, also komplett den Anforderungen bei der Verlegung genügen, beispielsweise auch in Längsrichtung abgedichtet sind.

Besonders geeignet ist die vorliegende Erfindung zum spleißfreien Anschließen von Teilnehmern eines Glasfasernetzes an ein optisches Kabel. Zu diesem Zweck erfolgt vor der Verlegung des Kabels an jeweils zwei längs des Kabels voneinander entfernten, jedoch einander zugeordneten Stellen von außen her durch den Kabelmantel hindurch ein Zugriff zu den optischen Fasern, wobei die eine Stelle die Trennstelle und die andere die Abzweigstelle ist. An der Trennstelle werden eine oder mehrere ausgewählte Fasern durchtrennt und im Kabelinnern zur Abzweigstelle hingezogen und dort aus dem Kabelinnern nach außen geführt. Das optische Kabel bleibt auch an der Abzweigstelle ungetrennt, sie kann daher mit geringen äußeren Abmessungen ausgeführt werden. Da die Entfernung zwischen Abzweigstelle und Trennstelle entsprechend den vorgesehenen Entfernungen bis zum Teilnehmer bzw. entsprechend dem an der Abzweigstelle gewünschten Vorrat an optischen Fasern frei gewählt werden kann, ist das Herausziehen der an der Trennstelle geschnittenen optischen Fasern problemlos durchzuführen. Besonders unproblematisch ist diese Maßnahme vor allem dann, wenn die Vorbereitungen für das Anschließen von Teilnehmern an einem optischen Kabel bei der Herstellung des Kabels, aber auf jeden Fall vor der Verlegung vorgenommen wird. Wegen der geringen äußeren Abmessungen der Abzweigstelle ist es nämlich möglich, daß vorbereitete Kabel wie jedes andere auch aufzutrommeln und zum Verlegeort zu transportieren. Besonders vorteilhaft erscheint daher dieses Verfahren dann, wenn neue Netze geplant und entsprechend der geplanten Verteilung bis hin zum Teilnehmer Kabel zu verlegen sind.

Die von der Trennstelle bis zur Abzweigstelle innerhalb des Kabels gezogene Faserlänge kann als Faservorrat in der Abzweigstelle verbleiben, man kann aber auch so vorgehen, daß die nach außen geführte Faserlänge unmittelbar als Teilnehmeranschlußkabel ausgebildet wird. In diesem Fall wird man so vorgehen, daß die Abzweigstelle von einer Muffe mit Abgängen für Anschlußkabel umschlossen wird.

Zur Durchführung dieses Verfahrens und zur Herstellung eines optischen Kabels mit integrierten Anschlußkabeln ist eine Abzweigmuffe vorgesehen, die aus zwei halbschalenförmigen, über der Abzweigstelle des optischen Kabels zusammenfügbaren Formkörpern besteht, wobei Durchtrittsöffnungen für das optische Kabel und die Teilnehmeranschlußkabel vorgesehen sind. Diese Ausführungsform der Abzweigmuffe bedingt eine auch nach Kabelherstellung problemlose Durchführung zur Vorbereitung des Teilnehmeranschlusses, durch Klemmen oder Schrauben beispielsweise sind die Halbschalen einfach zu arretieren und über dem optischen Kabel und der Abzweigstelle sicher zu fixieren.

Die Abzweigmuffe selbst ist vom Raumbedarf so ausgestattet sein, daß sie zur Aufnahme einer oder mehrerer Vorratslängen von aus dem Kabel heraus geführten optischen Fasern dient. Falls erforderlich, können auch entsprechend ausgebildete Kassetten zur Aufnahme der Faserlänge untergebracht werden.

Für den Fall jedoch, daß die Abzweigstelle und damit die dort befindliche Abzweigmuffe unmittelbar zur Fixierung der Teilnehmeranschlußkabel verwendet werden soll, wird man in Weiterführung der Erfindung so vorgehen, daß mindestens eine der Halbschalen, die den Muffenkörper bilden, eine konische Form aufweist, wobei der konisch verlaufende Teil als Führung für die als Teilnehmeranschlußkabel weitergeführten, aus dem optischen Kabel abgezweigten Fasern dient. Damit ist eine sichere, mechanisch feste Verbindung für das Teilnehmeranschlußkabel hergestellt, die Faser selbst ist hinreichend geschützt, eine Längsabdichtung des Anschlußkabels ist problemlos durchzuführen.

Je nach Kabeltyp und dadurch bedingt unterschiedlichem Aufbau des Kabels kann man die Abzweigmuffe in ihrem Innern mit entsprechenden Klemm- oder Befestigungselementen, beispielsweise für die Schutzrohre, für gesonderte Zugelemente, für Erdseile und dergl. ausstatten. Gleiches gilt selbstverständlich auch für das aus der Abzweigmuffe abgeführte Teinehmeranschlußkabel.

Selbstverständlich ist das geschilderte Verfahren so wie die verwendete Abzweigmuffe weitgehend unabhängig von der Anzahl der abgehenden Teilnehmeranschlußkabel. Entsprechend der vorher bestimmten Anzahl von Teilnehmeranschlüssen von dem betreffenden Abzweig, sind in dem Muffenkörper bzw. in den zusammenfügbaren Halbschalen eine entsprechende Anzahl von Ausgängen vorzusehen.

Für die Erfindung ist wesentlich, daß die Abzweigmuffe, die sich bei einem erfindungsgemäß hergestellten Kabel also bereits an dem aufgetrommelten Kabel befinden kann, nur wenig aufträgt. Der Muffenkörper ist daher so ausgebildet, daß er einen äußeren Durchmesser von weniger als 10 cm, insbesondere weniger als 5 cm, und eine Länge von weniger als 20 cm, insbesondere weniger als 15 cm, aufweist.

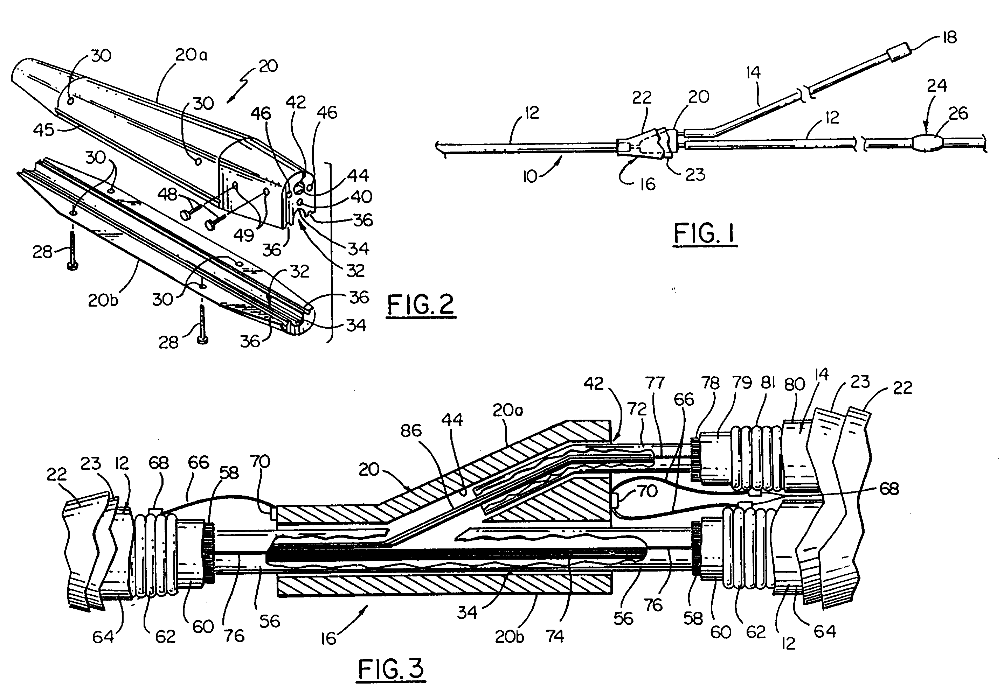

Die Erfindung sei anhand der in den Fig. 1 bis 10 dargestellten Ausführungsbeispiele näher erläutert.

Die Fig. 1 zeigt ein vorfabriziertes spleißloses optisches Kabel 10, bestehend aus einem Verteilerkabel 12 und einem Anschlußkabel oder einer Stichleitung 14 kleineren Durchmessers, die von der Abzweigstelle 16 ausgeht. Das Verteilerkabel, das mehrere tausend Meter betragen kann, dient der Verbindung zweier entfernt gelegener Stellen eines Nachrichtenübertragungssystems. Das Anschlußkabel oder die Stichleitung 14 dient dazu, Verbindungen vom Verteilerkabel 12 zu einer Vielzahl örtlicher Teilnehmer in Häusern oder Gebäuden herzustellen. Das Anschlußkabel selbst, das üblicherweise zwei oder mehr optische Fasern beinhaltet und gewöhnlich weniger als 5 m lang ist, kann am Verteilerkabel 12 durch Bänder, Laschen und dergl. während der Kabelfertigung gehalten werden, bis die Verlegung des Kabels gefordert wird. Das Anschlußkabel 14 kann auch bereits vorkonfektioniert sein, d. h. mit den Anschlußelementen an den Enden der optischen Fasern versehen sein, die später beispielsweise für einen Hausanschluß oder dergl. benötigt werden. Ein solches Anschlußelement am Ende des Teilnehmeranschlußkabels 14 ist mit 18 bezeichnet.

Die Abzweigstelle 16 selbst ist umschlossen von einem Gehäuse 20, das die optischen Fasern vor mechanischer Beschädigung schützt. Mit 22 ist ein Feuchtigkeitsschutz bezeichnet, zweckmäßig wird man hierfür in der Wärme schrumpfbare, an sich bekannte Schutzkappen, Bänder oder sonstige wärmeschrumpfende Profile verwenden. Angeordnet zwischen dem Feuchtigkeitsschutz 22 und dem Muffenkörper 20 ist eine nichtklebende Umwicklung 23, so daß die Muffe leicht im Bedarfsfall wieder geöffnet werden kann.

Zur Herstellung einer spleißlosen Verbindung am Verteilerkabel 12 ist es erforderlich, daß die ausgewählten optischen Fasern von den Schutzelementen des Kabels, z. B. dem äußeren Mantel, der Metallarmierung, den Schutzhüllen usw., an der Trennstelle 24 freigelegt werden. Um den Zugriff zu den optischen Fasern zu erleichtern, können entsprechende Werkzeuge verwendet werden, wie sie beispielsweise in dem US-Patent 49 72 581 beschrieben sind. Die Trennstelle 24 kann z. B. 3,65 m von der Abzweigstelle 16 entfernt sein. Begrenzt wird die Entfernung zwischen der Trennstelle 24 und der Abzweigstelle 16 im wesentlichen durch die Zugkraft der ausgewählten optischen Fasern. An der Trennstelle 24 werden die ausgewählten optischen Fasern geschnitten. Anschließend wird diese Stelle wieder ausreichend verschlossen, den äußeren mechanisch festen Anschluß bildet eine Muffe 26 aus einem in der Wärme schrumpfbaren Material.

Die ausgewählten optischen Fasern des Verteilerkabels 12 werden dann von der Abzweigstelle 16 aus innerhalb der Kabelumhüllung dorthin gezogen, sowie aus dem Verteilerkabel 12 nach außen geführt. Die heraus geführte Länge der optischen Faser, beispielsweise von 3 bis 4 m, wird dann in einem Schutzmantel eingeführt, dieser Schutzmantel kann beispielsweise auch ein Leerkabel sein, z. B. ein optisches Kabel, in dem die optischen Fasern und das Füllmaterial zur Längsabdichtung und zum Schutz der optischen Fasern noch fehlt. Für die Erfindug ist es dabei unerheblich, welche Type eines optischen Kabels entsprechend der Erfindung zu verlegen ist. Auch kommt es für die Duchführung der Erfindung nicht darauf an, auf welche Weise die aus dem Verteilerkabel 12 herausgeführte Länge in das anschließende Schutzrohr oder das Leerkabel eingeführt wird. Wie bei den üblichen optischen Fasern auch, ist es auf jeden Fall zweckmäßig, nach der Einführung der herausgeführten Faserlänge und Einführung in ein Schutzrohr oder in ein Leerkabel dieses anschließend mit der für solche Kabel bekannten Füllmasse auszufüllen.

Wie bereits ausgeführt, hängt die zu wählende Entfernung zwischen der Abzweigstelle 16 und der Trennstelle 24 von der Zugfestigkeit der im Verteilerkabel 12 befindlichen optischen Fasern ab. Für den Fall, daß es aufgrund der geplanten Netzkonfiguration erforderlich ist, beispielsweise Anschlußkabel 14 mit einer Länge von mehr als 7 oder 8 m herzustellen, kann man nach einem weiteren Erfindungsgedanken auch so vorgehen, daß zwischen der Abzweigstelle 16 und der Trennstelle 24 weitere Öffnungen mit Zugriff zu den ausgewählten optischen Fasern vorgesehen werden, so daß die ausgewählten optischen Fasern z. B. von der Trenstelle zur ersten Öffnung, von der ersten Öffnung zur zweiten Öffnung usw. sowie von der letzten Öffnung bis zur Abzweigstelle 16 gezogen werden. Auf diese Weise ist das z. B. von der Abzweigstelle 16 abgehende 30 m und mehr lange Anschlußverteilerkabel 14 auch zu weiter entfernten Hausanschlüssen zu führen. Je nach Zugfestigkeit der verwendeten optischen Fasern kann man die Entfernung zwischen der Trennstelle und der ersten Öffnung, zwischen der ersten Öffnung und der zweiten usw. zwischen 3 und 4 m auswählen.

Die Fig. 2 verdeutlicht eine entsprechend dem Ausführungsbeispiel der Erfindung verwendete Abzweigmuffe. Sie ist mit 20 bezeichnet, sie kann aus einem geeigneten Metall bestehen, beispielsweise aus Aluminium oder einer Metall-Kunststoffkombination. Der Muffenkörper selbst besteht aus zwei Halbschalen 20a und 20b, welche durch Schrauben 28 zusammengehalten werden, die durch Bohrungen 30 in den Halbschalen hindurchgeführt sind. Im zusammengebauten Zustand ist eine solche Muffe lang und dünn, etwa von zylindrischer äußerer Form und besitzt eine Länge von 12 bis 13 cm sowie einen äußeren Durchmesser an den am weitesten entfernten Stellen von annähernd 2,5 cm.

Zur Montage der Muffe 20 an der Abzweigstelle 16 weist jede Halbschale 20a und 20b dem jeweiligen Kabeltyp angepaßte längs verlaufende Nuten oder Kanäle 32 auf. Diese Nuten 32 können beispielsweise die Form 34 für die eine Kabeltype und die Form 36 für eine andere aufweisen. Die Nuten oder Kanäle 36 können beispielsweise auch zur Führung der Zugelemente des Kabels verwendet werden.

An einem oder beiden Enden der Halbschale 20a sind im übrigen Bohrungen 40 vorgesehen, um ein Erdungsband oder einen Erdungsstreifen an dem Muffenkörper zu befestigen. Mit dem anderen Ende des Erdungsbandes oder Erdungsstreifens ist die Armierung des Verteilerkabels 12 verbunden. Selbstverständlich ist es auch möglich, die getrennten metallischen Kabelmäntel des Verteilerkabels unter Ausschluß der Muffe 20 unmittelbar zu verbinden, der Erdungsleiter kann dann in der Nut 45 des Muffenkörpers entlang geführt werden.

Das eine Ende 41 der oberen Halbschale 20a hat darüberhinaus einen Eingangskanal für das Anschlußverteilerkabel, dieser ist mit 42 bezeichnet. Dieser Kanal 42 mündet, wie insbesondere aus der Fig. 3 ersichtlich, im zusammengebauten Zustand des Muffenkörpers 20 im Kanal 34 für das optische Verteilerkabel 12. Der Eingangskanal für das Anschlußverteilerkabel 14 weist eine zylindrische Form auf, längs dieses Kanals sind zwei weitere Kanäle 46 zur Aufnahme beispielsweise von Zugelementen für das Kabel vorgesehen. Die Dimensionierung der Kanäle selbst ist an die jeweils verwendete Kabeltypen angepaßt, die als Anschlußkabel 14 verwendet werden. Schrauben 48, die in entsprechende Bohrungen 49 der Halbschale 20a eingeführt werden, sichern die Zugelemente des abgehenden Kabels und fixieren diese an den Muffenkörper.

In der Fig. 3 ist an einem gegenüber den Fig. 1 und 2 vergrößerten Schnittbild die Abzweigstelle 16 dargestellt. In diesem Beispiel sind die Schutzhüllen 56 bzw. 72 des Verteilerkabels 12 sowie des Teilnehmeranschlußkabels 14 aber auch die Zugelemente 76 und 77 stellenweise entfernt, so daß die optischen Fasern 74 und 86 der beiden Kabel zugänglich sind. In der dargestellten Position sind die beiden Halbschalen 20a und 20b zusammengefügt und mittels der Sicherungsschrauben 28 zusammengehalten. Das nichtklebende Band 23 und die in der Wärme schrumpfbare Umhüllung 22 umschließen die Abzweigstelle vollständig.

Wie dargestellt, enthält das Verteilerkabel 12 eine Schutzhülle oder ein Schutzrohr 56, welches eine Vielzahl optischer Fasern 74 enthält, die sich in Längsrichtung des Kabels erstrecken. Die Anzahl der optischen Fasern hängt im wesentlichen von den Anforderungen ab, die an das spezielle Kabel hinsichtlich der Übertragungsmöglichkeiten gestellt werden. Zwei Zugelemente 76 sind in Längsrichtung der Schutzhülle 56 geführt, statt dessen kann selbstverständlich auch eine andere Umhüllung, Bewicklung oder ein Geflecht verwendet werden. Wie ferner aus der Fig. ersichtlich, ist für die Herstellung der Abzweigstelle im Verteilerkabel 12 lediglich eine kleine Öffnung erforderlich. Wie ferner dargestellt, sind die Zugelemente 76 vollständig durch die Muffe hindurch geführt. Eine zusätzliche Garnbespinnung 58 aus hochzugfesten Fäden ist über dem Schutzrohr 56 angeordnet, um eine zusätzliche Zugfestigkeit bei gleichbleibender Flexibilität des Kabels zu gewährleisten. Als Material für diese zusätzliche Bespinnung kann beispielsweise eines auf Basis Polyaramid verwendet werden. Ein Innenmantel 60 ist auf dieser Bespinnung beispielsweise durch Extrusion aufgebracht, ein Schutzmantel 62, beispielsweise aus Metall, befindet sich darüber, nach außen abgedeckt wird er durch den äußeren Mantel 64 aus einem extrudierten Polymer.

Zwar ist es erforderlich, den geschilderten Schichtenaufbau zu entfernen, um an die optischen Faern heranzukommen, da die Gesamtabmessungen der Abzweigstelle jedoch gering sind, ergeben sich hierbei keine Schwierigkeiten.

Das Teilnehmeranschlußkabel 14 enthält ein Schutzrohr 72, welches eine oder mehrere optische Fasern 86 umschließt. Die Anzahl der optischen Fasern, obwohl in der Regel größer als sechs, kann selbstverständlich variieren, die Anzahl ist abhängig von den Anforderungen, die an das Kabel gestellt werden. Mit wechselnder Schlagrichtung aufgebrachte hochzugfeste Fäden 78 sind über dem Schutzrohr 72 aufgebracht, sie sind geeignet, Zugkräfte aufzunehmen und gleichzeitig die gewünschte Flexibilität des Teilnehmeranschlußkabels zu gewährleisten. Als Material für diese Fäden 78 wird z. B. ein Aramid gewählt. Beidseitig des Schutzrohres 72 sind längs verlaufende zusätzliche hochzugfeste Elemente 77 angeordnet. Über die zugfesten Elemente und um die aufgeseilten Garne 78 ist ein Innenmantel 79 aufgebracht, beispielsweise aufextrudiert, der von einem Schutzmantel 81 überdeckt ist. Letzterer kann beispielsweise aus einem gewellten Metallrohr bestehen. Der äußere Schutzmantel 80 ist aufextrudiert, hierfür werden an sich bekannte Polymermaterialien verwendet.

Zur Herstellung der in der Fig. 3 dargestellten spleißfreien Verbindung werden die aus dem Verteilerkabel 12 herausgeführten optischen Fasern wie dargestellt durch den Kanal 44 der konisch ausgebildeten oberen Halbschale 20a geführt, und zwar derart, daß die größte Länge der optischen Fasern 86 sich außerhalb der Muffe 20 befindet. Diese Länge wird dann anschließend in das leere Anschlußkabel eingeführt, anschließend wird dieses Kabel von den Enden her mit einer Füllmasse in bekannter Weise gefüllt. Dann werden das Schutzrohr und die Zugelemente in den Kanal 42 eingeführt, um die Verbindung mit dem Muffenkörper herzustellen. Erdstreifen oder -bänder 66 werden verbunden an ihrem einen Ende mit dem Mantel 62 bzw. 81, hierfür können geeignete Klemmeinrichtungen, beispielsweise Klemmbänder 68, verwendet werden. Die Verbindung zum Muffenkörper erfolgt mittels der Schrauben 70. Ein nichtklebendes oder nichtverschweißendes Band 23 wird aufgebracht, das die Verbindungsstelle völlig umschließt und darüber wird ein wärmeschrumpfbares Band 22 in einer oder mehreren Lagen gewickelt und anschließend aufgeschrumpft. Diese Kombination von wärmeschrumpfbarem und nichtklebendem und nichtverschweißendem Material ist die Gewähr dafür, daß die Verbindungsstelle wasserfest, aber auch wieder zu öffnen ist, wenn ein Bedürfnis hierfür besteht. Falls der Muffenkörper aus den beiden Halbschalen aus Kunststoff besteht, ist in der Regel ein nichtklebendes oder nichtverschweißendes Band überflüssig.

Anstelle des in der Fig. dargestellten Kabels können auch andere Kabelkonstruktionen verwendet werden, beispielweise solche, bei denen die optischen Fasern in Nuten eines zentralen Kerns angeordnet sind, aber auch solche, bei denen die optischen Fasern bereits zu Bändchen zusammengefaßt in der Kabelschutzhülle angeordnet sind. Wesentlich ist in jedem Fall, daß die Verbindung spleißlos durchgeführt und zu diesem Zweck die optischen Fasern entsprechend der gewünschten Länge zu einem oder mehreren Teilnehmeranschlüssen aus dem Verteilerkabel heraus gezogen und für den Anschluß vorbereitet werden. Diese Maßnahme kann noch während der Fertigung des Kabels erfolgen, beispielsweise entsprechend einer Vorgabe der vorgesehenen Netzkonfiguration, so daß die Montagearbeiten wesentlich erleichtert, vor allem aber auch im Hinblick auf die empfindlichen Glasfasern sicherer durchzuführen sind. Da die spezielle Konstruktion der für die Abzweigstelle verwendeten Muffen geringstmögliche äußere Abmessungen zuläßt, kann die Abzweigstelle nach Festlegen der Teilnehmeranschlußkabel an der Oberfläche des Verteilerkabels problemlos zusammen mit dem Kabel aufgewickelt und zum Montageort transportiert werden.

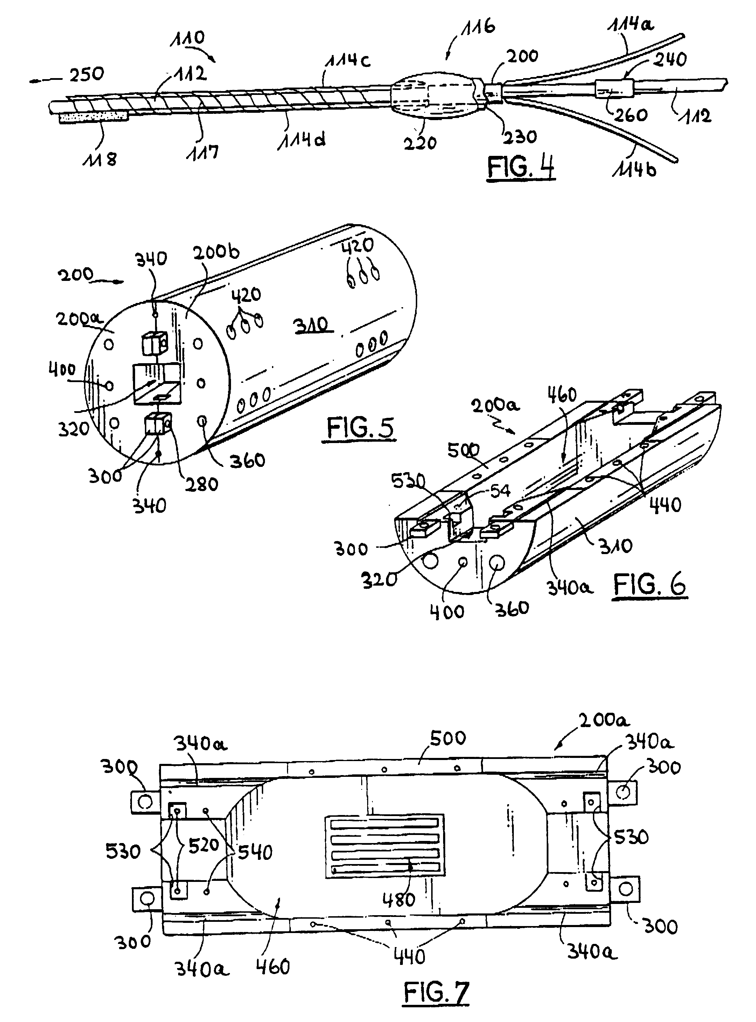

Die Fig. 4 zeigt ein optisches Kabel 110, das in der Fabrik hergestellt worden ist, trommelbar ausgeführt ist und neben dem optischen Verteilerkabel 112 vier getrennte Teilnehmeranschlußkabel 114a, 114b, 114c und 114d enthält, die aus der Abzweigstelle 116 herausgeführt sind. Diese Anschlußkabel, die in der Regel weniger als sechs optische Fasern enthalten und gewöhnlich weniger als 3 m lang sind, können auf dem Kabel 112 mittels einer Bewicklung oder mittels Laschen 117 bis zur Verlegung gehalten werden. Die Enden dieser Anschlußkabel können auch bereits mit entsprechenden Steckanschlüssen versehen, also vorkonfektioniert sein, um die Installation am Montageort zu erleichtern. Ein solcher Steckeranschluß ist mit 118 bezeichnet, er ist, wie aus der Fig. ersichtlich, wie das Anschlußkabel 114d auch, an der Oberfläche des Kabels 112 für den Transport festgelegt.

In der Fig. 5 ist ein Muffenkörper 200 dargestellt, der die optischen Fasern an der Verbindungsstelle schützend umschließt. Das gilt in gleicher Weise für den Schutz gegen Feuchtigkeit als auch gegen mechanische Beanspruchungen. Umgeben ist dieser Muffenkörper 200, wie in der Fig. 4 angedeutet, beispielsweise durch einen Schrumpfschlauch 220 oder durch eine Bebänderung aus in der Wärme schrumpffähigem Material. Die zwischen dem Muffenkörper und dem Schrumpfschlauch 220 angeordnete nichtklebende und nichtverschweißende Hülle 230 dient vor allem der Trennung zwischen Muffenkörper und Schrumpfschlauch 220. Dies erlaubt ein nachträgliches Öffnen der Abzweigstelle 116, wenn dies erforderlich werden sollte.

Wie bereits anhand der Fig. 1 bis 3 beschrieben, wird auch hier zur Herstellung einer Abzweigstelle eine Trennstelle 240 am Kabel 112 vorgesehen, die im vorliegenden Ausführungsbeispiel etwa 60 cm von der Abzweigstelle entfernt ist, um sicherzustellen, daß eine geeignete Faserlänge für den Abzweig zur Verfügung steht. Nach dem Trennen der ausgewählten Fasern wird die Öffnung durch einen Stopfen 260, beispielsweise ebenfalls aus einem wärmeschrumpffähigen Material, dicht und dauerhaft umschlossen.

Ähnlich wie der Muffenkörper nach der Fig. 2 besteht die Muffe entsprechend der Fig. 5 aus zwei Halbschalen 200a und 200b, die ebenfalls aus Metall oder Kunststoff, gegebenenfalls metallbeschichtet, bestehen können. Im Gegensatz zur ersten Variante bestehen hier die beiden Halbschalen aus geometrisch gleichen Teilen, zusammengehalten werden sie durch Schrauben 280, die durch die Laschen 300 hindurchgeführt sind, die an beiden Enden zusammengehalten werden. Im zusammengefügten Zustand ergibt sich ein langer dünner Zylinder, der eine Länge von etwa 18 cm und einen äußeren Durchmesser von 9 cm aufweist. Die beiden Halbschalen 200a und 200b schließen einen Hohlraum 460 ein, wie er in der Fig. 6 angedeutet ist. Dieser Raum bietet ausreichenden Platz für die Verbindung der aus dem Kabel 112 zur Abzweigstelle 116 zurückgezogenen Fasern mit den entsprechenden optischen Elementen der Teilnehmeranschlußkabel. An den Stirnseiten des Muffenkörpers 200 und entlang der zylinderförmigen Wand 310 sind verschiedene Öffnungen vorgesehen. Die Öffnungen in den beiden Halbschalen 200a und 200b entsprechen sich. So dient die Öffnung 320 zum Einführen des optischen Verteilerkabels 112, die Öffnungen 340 dienen zum Einführen der Anschlußkabel in den Muffenkörper oder für Zugelemente, wo deren optischen Fasern mit denen des Verteilerkabels 112 verbunden werden können. Weiterhin sind Öffnungen 360 vorgesehen, die sich bis in den Muffenraum erstrecken und zur Führung von gesonderten Zugelementen dienen, die im Schichtenaufbau der Kabel vorgesehen sind, oder auch für Anschlußkabel. Schraubenlöcher 400 dienen dazu, Erdungsbänder oder Erdungsstreifen der beiderseitigen Kabel zu verbinden. Die Wand 310 der jeweiligen Halbschalen besitzt ebenfalls eine Anzahl von Bohrungen, es sind Schraubenlöcher, die mit 420 bezeichnet sind. Hier können Schrauben zur Befestigung von im Schichtenaufbau der Kabel angeordneten Zugelemente verwendet werden.

Die in der Fig. 6 dargestellte Halbschale des Muffenkörpers 200 ist in der Fig. 7 noch einmal in einer Draufsicht dargestellt. Für die gleichen Teile sind die gleichen Bezugszeichen verwendet worden. Der Eingangskanal 320 ist rechteckförmig ausgebildet. Er ist so dimensioniert, daß er eine Klemmvorrichtung aufnehmen kann, die mit 940 bezeichnet ist und im einzelnen aus den Fig. 9 und 10 hervorgeht. Im Bereich der rechteckförmigen Eingangskanäle sind ferner Ausnehmungen 530 vorgesehen, Schraubbohrungen 520 und 540 dienen der Halterung der Klemmvorrichtung 940 nach der Montage.

Innerhalb des Muffengehäuses ist ferner, wie aus der Fig. hervorgeht, ein sogenannter Spleißhalter 480 vorgesehen, er hat die Aufgabe, die Verbindungsstelle vor unerwünschten Bewegungen zu schützen. Die längs der Muffenwandung vorgesehenen Bohrungen 440 dienen der Befestigung der Halteklammern 900, die zur Halterung der optischen Fasern dienen, um zu verhindern, daß diese bei der Montage der Halbschalen eingeklemmt werden. Diese Schraublöcher sind angeordnet innerhalb der Ausnehmung 500.

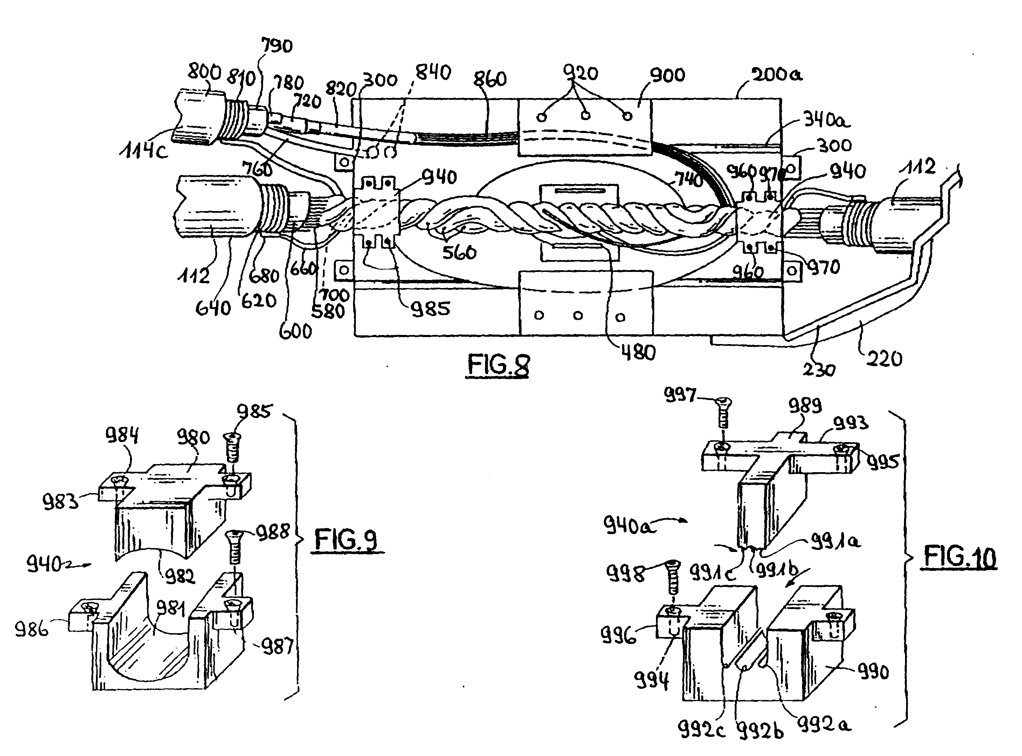

Die Fig. 8 zeigt ferner die Verbindungsstelle 116 innerhalb einer Halbschale 200a, einen Teil der Abdeckung 220 und der Bewicklung 230. Wie aus dieser Fig. ersichtlich, enthält das Verteilerkabel 112 eine Vielzahl von Schutzrohren 560, die die optischen Fasern 740 des Kabels enthalten. Die Anzahl der optischen Fasern, die in jedem Schutzrohr enthalten sind, hängt von den Forderungen ab, die an die Übertragung gestellt werden. Mit 580 sind zugfeste Fäden bezeichnet, die über den Schutzrohren angeordnet sind, sie können beispielsweise aus einem Kunststofff auf Basis Polyaramid bestehen. Ein innerer Mantel 600 kann dann auf die Garnbespinnung aufgebracht sein. Darüber befindet sich im dargestellten Ausführungsbeispiel ein Mantel 620, der als mechanischer Schutz dient und beispielsweise als gewellter Metallmantel ausgebildet sein kann. Der äußere Mantel 640 ist aufextrudiert. Ein Erdseil oder ein Erdband 660 ist an dem einen Ende mit dem Mantel 620 des Kabels mit Hilfe einer Klammer 680 verbunden und am anderen Ende mit dem Muffenkörper über eine Schraube 700.

Es ist erforderlich, den äußeren Mantel, die Bewehrung, die hochzugfesten Fäden und den inneren Mantel zu entfernen, so daß nur das Schutzrohr und ein zentrales Zugelement sich innerhalb des Muffenkörpers befinden.

In diesem Fall besteht das Anschlußkabel 114a aus einem einzigen Schutzrohr 720, das eine oder mehrere optische Fasern 860 enthält. Auch hier ist oberhalb des Schutzrohres 720 eine Garnbespinnung 780 vorgesehen, außerdem verlaufen in Längsrichtung mit dem Schutzrohr und angeordnet auf beiden Seiten dieses Rohres hochzugfeste Elemente 760. Über der Bespinnung aus zugfesten Garnen 780 ist ein innerer Mantel 790 aufgebracht, der aus extrudierbaren Polymermaterialien besteht. Wie bereits beim Verteilerkabel 112 beschrieben, ist darüber ein äußerer Schutzmantel 810 vorgesehen, darüber befindet sich der Außenmantel 800 aus einem extrudierten Polymermaterial.

Ähnlich den Aufbauelementen des optischen Verteilerkabels muß auch hier der Außenmantel, die Bewehrung, der Innenmantel sowie die zugfesten Garne entfernt werden, um an das Schutzrohr 720 heranzukommen. Ein Transportrohr 820, vorzugsweise aus einem Material wie Nylon oder Polyester, wird dann um die optischen Fasern zum Schutz herumgelegt. Die optischen Fasern werden dann in die Muffe hineingeführt entlang dem Eingangskanal für das Verteilungskabel. Das Transportrohr 820 ist dabei so dimensioniert, daß es sicher innerhalb des Kabeleinführungskanals mit diesem fluchtet. Falls das Schutzrohr 720 entsprechend dimensioniert ist, kann auf das Transportrohr 820 auch verzichtet werden. Jedes der zugfesten Elemente 760 wird durch die Öffnungen 360 in das Innere der Muffe geführt und dort durch Schrauben 840 gesichert. Ein Teil des benachbarten Schutzrohres 560 des Verteilerkabels 112 wird sorgfältig entfernt, so daß etwa eine Länge von 60 cm der ausgewählten Fasern 740 gebildet wird, die an der Trennstelle 240 vorher geschnitten worden sind und dann innerhalb des Schutzrohres 560 durch das Kabel zurückgezogen wurden. Die ausgewählte Fasern 740 werden auf eine entsprechende Länge geschnitten und in bekannter Weise mit der entsprechenden, in die Muffe hineingeführten Fasern des Teilnehmeranschlußkabels 114c verbunden. Die erfindungsgemäße Anordnung bietet hierbei die Möglichkeit, daß der vorgeschriebene Krümmungsradius der zu verbindenden Fasern nicht unterschritten wird. Die Spleißstelle selbst kann dann mittels des Halters 480 gesichert werden, so daß keine Relativbewegung zur Muffe auftritt, wenn das Kabel zur Verlegung aufgetrommelt und an dem Montageort wieder abgewickelt wird. Im übrigen besitzt die Muffe ausreichend Platz für wenigstens sechs solcher vorbeschriebener Spleiße, so daß nicht benötigte Fasern als Vorrat innerhalb des Muffengehäuses aufgewickelt werden können.

Da die ausgewählten optischen Fasern an der Trennstelle außerhalb der Spleißverbindung geschnitten und sorgfältig innerhalb des Kabels zurückgezogen und dort in der Muffe als Vorrat gehalten werden können, kann die Muffe selbst in ihren Abmessungen klein gehalten werden. Sie steht damit im Gegensatz zu den bekannten großvolumigen Spleißeinrichtungen, welche groß genug sind, um einen hinreichenden Vorrat an Fasermaterial einschließlich der zugehörigen, aufgewickelten Schutzrohre aufzunehmen. Durch die den Muffenkörper bildenden Halbschalen ist es aber auch möglich, zumindest eine bestimmte Länge an Schutzrohren in der einen Hälfte des Muffenkörpers und die bevorrateten optischen Fasern in der anderen Hälfte des Muffenkörpers unterzubringen.

Auf jeder Längsseite in einer Ausnehmung der Halbschalen 200a und 200b ist eine Klemmvorrichtung 900 vorgesehen, die mit Schrauben 920 dort arretiert ist. Diese Klemmhalterung ist im Grunde eine dünne, flache Platte, entweder aus Metall oder Kunststoff und dient als sich uber die optischen Fasern erstreckende Deckleiste. Sie verhindert, daß die optischen Fasern aus ihrer Halterung herausgleiten und unbeabsichtigt zwischen die beiden Halbschalen bei der Montage gelangen.

Die Erfindung ist selbstverständlich nicht auf die in der Fig. 8 dargestellten Kabeltypen beschränkt, die gleichen Maßnahmen können auch getroffen werden, wenn es sich bei dem Kabel 112 z. B. um ein solches handelt, bei dem die Fasern in Nuten eines zentralen Kunststoffkerns angeordnet sind.

Zur Halterung der in den Muffenkörpern einlaufenden oder herausgeführten Kabel dienen Klemmvorrichtungen 940, welche an jedem Ende der Muffe durch Schrauben 960 und 970 arretiert sind. Einzelheiten solcher Klemmvorrichtungen sind aus den Fig. 9 und 10 ersichtlich, die, wie die entsprechenden Ausnehmungen zeigen, in ihrer Gestaltung auf die verwendeten Kabeltypen abgestellt sind. Die Klemmvorrichtung 940, dargestellt in der Fig. 9, besteht aus einem oberen Teil 980 und einem Teil 981, diese beiden Teile werden in die oberen und unteren Halbschalen der Muffe an den Eingängen für die Kabel eingefügt. Das obere Teil 980 der Klemmvorrichtung hat im wesentichen eine rechteckige Form, an der unteren Seite besitzt es eine konkave halbzylindrische Preßfläche 982. Angebracht an den Seiten sind Flansche 983 mit Bohrungen 984 für die Schrauben 985. Entsprechend sind im unteren Teil 981 Flansche 986 mit Bohrungen 987 und zugehörigen Schrauben 988 vorgesehen.

Die Fig. 10 schließlich veranschaulicht eine Klemmvorrichtung 940a für die Fixierung der Kabelenden beim Einführen oder beim Herausführen aus der Kabelmuffe. Auch diese Klemmvorrichtung besteht wieder aus einem oberen Teil 989 und einem unteren Teil 990. Klemmflächen 991a, 991b und 991c wirken mit den unteren entsprechend ausgebildeten Nuten oder Ausnehmungen 992a, 992b und 992c so zusammen, daß nach Einlegen eines Kabels oder auch von Zugelementen und Zusammenführen der beiderseitigen Klemmteile die Kabel oder Zugseile fest an bzw. in der Muffe arretiert sind, wenn diese Klemmvorrichtung 940a, wie vorgesehen, an den Muffeneingängen und -ausgängen mittels Schrauben befestigt ist. Diesem Zweck, nämlich der Halterung der Klemmvorrichtung 940a im Muffengehäuse dienen die beiderseitigen Flansche 993 und 994, die mit Bohrungen 995 und 996 versehen sind, in die jeweils Befestigungsschrauben 997 und 998 eingeführt werden.

Aufgrund der geringen äußeren Abmessungen, der sicheren Umhüllung des Spleißes bei der vorliegenden Erfindung und der einfachen und sicheren Montage kann der Abzweig bereits bei der Herstellung des optischen Kabels angebracht werden. Da eine hinreichende Fixierung aller Elemente in der Muffe erreicht ist, kann das Kabel, so wie es in der Fig. 4 dargestellt ist, problemlos auf Kabeltrommeln aufgewickelt und von diesen wieder abgewickelt werden. Die Herstellung einer Abzweigstelle kann aber auch, wie bereits erwähnt, nach der Herstellung des Kabels an der Montagestelle erfolgen, auch hier kommt der einfache Aufbau der Abzweigung und die Möglichkeit, die Länge des abgehenden Teilnehmerkabels selbst zu bestimmten, einer sicheren und problemlosen Montage zugute.

## Patentansprüche

1. Konfektioniertes optisches Kabel (10, 110) bestehend aus einem Verteilerkabel (12, 112) und davon abgezweigten Teilnehmerkabeln (14, 114a, 114b, 114c, 114d), wobei das Verteilerkabel (12, 112) aus einer Vielzahl von Fasern (74, 740), die in mindestens einem Schutzrohr (56, 560) verlaufen, besteht, mit längs des Kabels (10, 110) in Abständen angeordneten Trenn- und Abzweigstellen (24, 16, 240, 116) für ausgewählte Fasern (74, 740), die an den Abzweigstellen (16, 116) aus dem Verteilerkabel (12, 112) herausgeführt und von Schutzhüllen (72, 720) umgeben sind und die Teilnehmerkabel (14, 114a, 114b, 114c, 114d) bilden, deren Länge durch die Entfernung Trennstelle (24, 240) - Abzweigstelle (16, 116) bestimmt sind, wobei die Abzweigstelle (16, 116) mit einer Abzweigmuffe (20, 200) mit Abgängen für die Teilnehmerkabel (14, 114a, 114b, 114c, 114d) versehen ist, dadurch gekennzeichnet, daß die Abzweigmuffe (20, 200) aus zwei halbschalenförmigen, über die Abzweigstelle (16, 116) des optischen Kabels (10, 110) zum Muffenkörper zusammenfügbaren Formkörpern (20a, 20b, 200a, 200b) mit Durchtrittsöffnungen für das Verteilerkabel (12, 112) und das oder die Teilnehmerkabel (14, 114a, 114b, 114c, 114d) besteht, daß die Formkörper (20a, 20b, 200a, 200b) die Abzweigstelle (16, 116) umgeben, daß sich die Enden der Schutzhüllen (72, 720) der Teilnehmerkabel (14, 114a, 114b, 114c, 114d) innerhalb des Muffenkörpers befinden, wobei die Formkörper (20a, 20b, 200a, 200b) so ausgebildet sind, daß die nach außen geführten Fasern (74, 740) als Faservorrat innerhalb des Muffenkörpers an der Abzweigstelle (16, 116) verbleiben können und wobei die Abmessungen der Abzweigmuffe (20, 200) so gewählt sind, daß das Verteilerkabel (12, 112) zusammen mit den abgezweigten Teilnehmerkabeln (14, 114a, 114b, 114c, 114d) trommelbar ist.

2. Kabel nach Anspruch 1, dadurch gekennzeichnet, daß der die Abzweigmuffe (20, 200) bildende Muffenkörper einen äußeren Durchmesser von weniger als 5 cm und eine Länge von weniger als 15 cm aufweist.

3. Kabel nach Anspruch 1 oder 2, gekennzeichnet durch eine konische Form mindestens einer der halbschalenförmigen Formkörper (20a, 20b), wobei der konisch verlaufende Teil als Führung für die als Teilnehmerkabel (14) weitergeführten, aus dem optischen Kabel (10) abgezweigten Fasern (74) dient.

## Claims

1. Manufactured optical cable (10, 110) comprising a distributor cable (12, 112) and subscriber cables (14, 114a, 114b, 114c, 114d) branched off therefrom, the distributor cable (12, 112) comprising a multiplicity of fibres (74, 740) which run in at least one protective tube (56, 560), having isolating and branching points (24, 16, 240, 116) arranged at intervals along the cable (10, 110) for selected fibres (74, 740), which are led out of the distributor cable (12, 112) at the branching points (16, 116) and are surrounded by protective shrouds (72, 720) and which form the subscriber cables (14, 114a, 114b, 114c, 114d), the length of which is determined by the distance between the isolating point (24, 240) and the branching point (16, 116), the branching point (16, 116) being provided with a branching sleeve (20, 200) with outlets for the subscriber cables (14, 114a, 114b, 114c, 114d), characterized in that the branching sleeve (20, 200) comprises two half-shell-shaped moulding. (20a, 20b, 200a, 200b) which can be joined over the branching point (16, 116) of the optical cable (10, 110) to form the sleeve body, the mouldings having passage openings for the distributor cable (12, 112) and the subscriber cable or cables (14, 114a, 114b, 114c, 114d), in that the mouldings (20a, 20b, 200a, 200b) surround the branching point (16, 116), in that the ends of the protective shrouds (72, 720) of the subscriber cables (14, 114a, 114b, 114c, 114d) are located inside the sleeve body, the mouldings (20a, 20b, 200a, 200b) being designed such that the fibres (74, 740) led to the outside can remain as spare fibre inside the sleeve body at the branching point (16, 116), and the dimensions of the branching sleeve (20, 200) being selected such that the distributor cable (12, 112), together with the branched-off subscriber cables (14, 114a, 114b, 114c, 114d), can be reeled up on a drum.

2. Cable according to Claim 1, characterized in that the sleeve body forming the branching sleeve (20, 200) has an outer diameter of less than 5 cm and a length of less than 15 cm.

3. Cable according to Claim 1 or 2, characterized by a conical form of at least one of the half-shell-shaped mouldings (20a, 20b), the conically running part serving as a guide for the fibres (74) which are branched off from the optical cable (10) and guided further as the subscriber cable (14).

## Revendications

1. Câble optique surmoulé (10, 110) constitué d'un câble de branchement (12,112) et de câbles d'abonné (14, 114a, 114b, 114c, 114d) en partant, ledit câble de branchement (12, 112) étant composé d'une pluralité de fibres (74, 740) s'étendant au moins dans un tube protecteur (56, 560), avec des points de sectionnement et de branchement (24, 16, 240, 116) disposés le long du câble (10, 110) à distance les uns des autres pour des fibres (74, 740) sélectionnées qui sont sorties du câble de branchement (12, 112) aux points de branchemnt (16, 116), sont entourées de gaines de protection (72, 720) et constituent les câbles d'abonné (14, 114a, 114b, 114c, 114d), dont la longueur est déterminée par la distance point de sectionnement (24, 240) - point de branchment (16, 116), le point de branchement (16, 116) étant muni de départs pour le câble d'abonné (14, 114a, 114b, 114c, 114d), caractérisé en ce que la boite de branchement (20, 200) est constituée de deux corps moulés (20a, 20b, 200a, 200b) en forme de demi-coquille, pouvant être assemblés au niveau du point de branchement (16, 116) du câble optique (10, 110) pour former le corps de manchon avec des ouvertures pour le passage du câble de branchement (12, 112) et du ou.des câble(s) d'abonné (14, 114a, 114b, 114c, 114d), en ce que les corps moulés (20a, 20b, 200a, 200b) entourent le point de branchement (14, 116), en ce que les extrémités des gaines de protection (72, 720) des câbles d'abonné (14, 114a, 114b, 114c, 114d) se trouvent à l'intérieur du corps de manchon, les corps moulés (20a, 20b, 200a, 200b) étant configurés de telle façon que les fibres (74, 740) conduites vers l'extérieur) peuvent rester à l'intérieur du corps de manchon, au niveau du point de branchement (16, 116) en tant que réserve de fibres, et les dimensions du manchon de branchement (20, 200) étant choisies de manière que le câble de branchement (12, 112) puisse être enroulé sur un enrouleur de câble avec les câbles d'abonné (14, 114a, 114b, 114c, 114d).

2. Câble suivant la revendication 1, caractérisé en ce que le corps de manchon constituant le manchon de branchement (20, 200) présente un diamètre extérieur inférieur à 5 cm et une longuer inférieure à 15 cm.

3. Câble suivant la revendication 1 ou la revendication 2, caractérisé en ce qu'au moins l'un des corps moulés (20a, 20b) en forme de demi-coquille a une forme conique, la partie ayant une forme conique servant de guidage pour les fibres (74) partant du câble optique (10) et constituant les câbles d'abonné (14).
